# EUROPÄISCHE PATENTANMELDUNG

(11) **EP 0 586 726 A1**
(43) Veröffentlichungstag der Anmeldung: **16.03.1994**
(21) Anmeldenummer: 92115332.6
(22) Anmeldetag: 08.09.1992
(51) Int. Cl.: B65B 1/36

(54) **Ventil zur Dosierung von immobilisiertem Substrat**

(71) Anmelder: SMB TECHNIK GmbH GERT TRANSIER, D-68309 Mannheim (DE)
(72) Erfinder: Transier, Gert, W-6800 Mannheim 51 (DE)
(74) Vertreter: Ratzel, Gerhard, Dr.

(57) **Zusammenfassung**

Das Ventil weist einen, mindestens eine durchragende Dosierbohrung (5) besitzenden Dosierblock (2) auf, dessen Dosierbohrung(en) beidseitig von verfahrbaren Dosierschiebern (3,4) abdeckbar ist (sind), die durchragende Dosierbohrungen (6,7) aufweisen, welche mit der Dosierbohrung(en) des Dosierblocks wahlweise in eine annähernd Koaxialstellung bringbar sind und über mechanische, pneumatische oder elektrische Rückstellmittel, deren Rückstellkraft einstell- oder wählbar ist, in Sperrstellung versetzbar sind.

## Beschreibung

Die Erfindung betrifft ein Ventil zur Dosierung von immobilisiertem Substrat.

Unter immobilisiertem Substrat versteht man zum Zwecke der Eindämmung oder auch optimalen Ausnutzung seiner Wirkung gekapselte Stoffe.

Ein Beispiel eines solchen immobilisierten Substrats ist die gekapselte Hefe bei der Champagner-Herstellung.

Zur Einleitung der Gärung wird bei der Champagner-Herstellung dem Cuvee Zucker und Hefe zugesetzt. Die Hefe muß später aus dem Sekt entfernt werden. Dies erfolgt je nach angewendetem Verfahren mittels Zentrifugal- oder Schwerkraft, wobei mit Hilfe von Separatoren und Filtern oder Rütteln und Degorgieren die Hefe abgetrennt wird, bevor man die Dosage zuführt.

Um nun zu verhindern, daß die Hefe im Sekt als Schwebstoff auftritt und dadurch die Trennung von Hefe und Sekt erschwert wird, ist man dazu übergegangen, die Hefe als Immobilisat zu gestalten; d.h. die Hefe liegt in gekapselter Form vor, derart, daß sie ihre Wirkung beim Gärprozeß entfalten kann, jedoch nicht als Schwebstoff austritt.

Diese Anwendung hat sich als vorteilhaft erwiesen, da hier aufwendige Arbeiten entfallen.

Bei der automatischen Befüllung von Sektflaschen mit der immobilisierten Hefe muß einerseits die Dosiermenge eingehalten werden und andererseits dürfen die Hefekapseln beim Dosiervorgang nicht beschädigt oder aufgebrochen werden. Letztere Voraussetzung konnte bei den bisherigen Dosiereinrichtungen nicht zufriedenstellend erreicht werden. Schon geringste Mengen an beschädigten Hefekapseln führt zur Trübung des Flascheninhaltes.

Der vorliegenden Erfindung liegt daher die Aufgabe zugrunde, ein Ventil zur Dosierung von immobilisiertem Substrat zu schaffen, mittels dem sowohl eine exakte Dosierung als auch die Unversehrtheit der Hefekapseln gewährleistet ist.

Diese Aufgabe wird erfindunsgemäß durch ein Ventil nach dem vorgeschlagenen Anspruch 1 gelöst.

Besondere Weiterbildungen der Erfindung sind in den Unteransprüchen gekennzeichnet.

Erfindungsgemäß wird hierbei das Ventil zur Dosierung von immobilisiertem Substrat durch einen Dosierblock gebildet, welcher eine Dosierbohrung aufweist und von entsprechenden verfahrbaren Dosierschiebern abgedeckt wird, die ebenfalls durchragende Dosierbohrungen aufweisen. Dosierblock sowie Dosierschieber sind somit in Frei- und Sperrstellungen zueinander stellbar, so daß zum Zwecke der Dosierung des Substrats eine Schleusenfunktion auftritt. Um nun ein Zerbrechen der gekapselten Stoffe, beispielsweise der immobilisierten Hefe zu verhindern, ist die Rückstellkraft der Rückstellmittel für die Dosierschieber vorwählbar oder einstellbar. Im Falle des Einsatzes einer Rückstellfeder übersteigt die Rückstellkraft nicht die Kraft, die die Kapsel des Substrats zum Bruch führen würde. Dies bedeutet, falls sich eine Kapsel zwischen Dosierbohrung des Dosierblockes und Dosierschieber einklemmt, verbleibt der Dosierschieber in dieser Stellung. Der links und rechts der Kapsel auftretende Spalt ist jedoch aufgrund des kreisrunden Querschnittes der Bohrung und der kreisrunden Bohrung des Dosierschiebers, die die Dosierbohrung des Dosierblockes am Rande überschneidet, stets kleiner als eine im Randbereich eingeklemmte Kapsel, so daß ein nicht vollständiges Schließen unschädlich für das Dosiervolumen ist.

Anhand den beigefügten Zeichnungen, die ein besonders bevorzugtes Ausführungsbeispiel der Erfindung zeigen, wird diese nun näher beschrieben. Dabei zeigen:

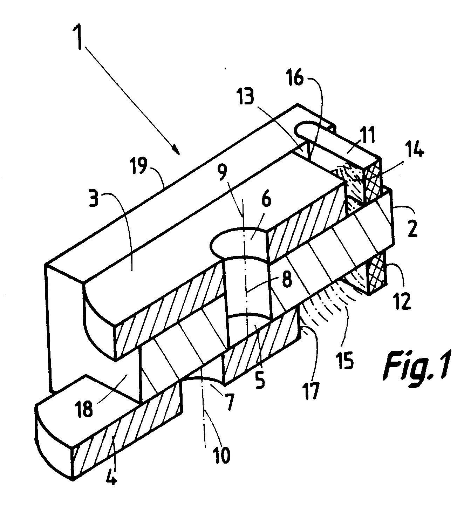

- Figur 1: eine perspektivische Darstellung des Dosierschieberventils in einem Halbschnitt;
- Figur 2, 3 und 4: das erfindungsgemäße Dosierschieberventil in einer Seiten-, Stirn- und Draufsicht.

Das Dosierschieberventil 1 wird durch einen Dosierblock 2 nebst Dosierschiebern 3 und 4 gebildet. Der Dosierblock 2 ist bevorzugterweise H-förmig ausgebildet und besitzt eine Durchgangsbohrung 5, welche beidseitig in jeweils eine Schieberwanne 13 einführt, welche bodenseitig durch den Steg 18 und randseitig von den Wandungen 19 und 20 eingegrenzt wird. Die Schieberwannen 13 sind jeweils durch einen Anschlag 11 und 12 begrenzt, welche in diesem Ausführungsbeispiel durch Paßfedern gebildet werden. In die Dosierschieber 3 und 4 sind nun wahlweise abwechselnd zum Steg 18 des Dosierblockes 2 verstellbar, derart, daß diese eine Freigabe- oder Sperrstellung miteinander bilden.

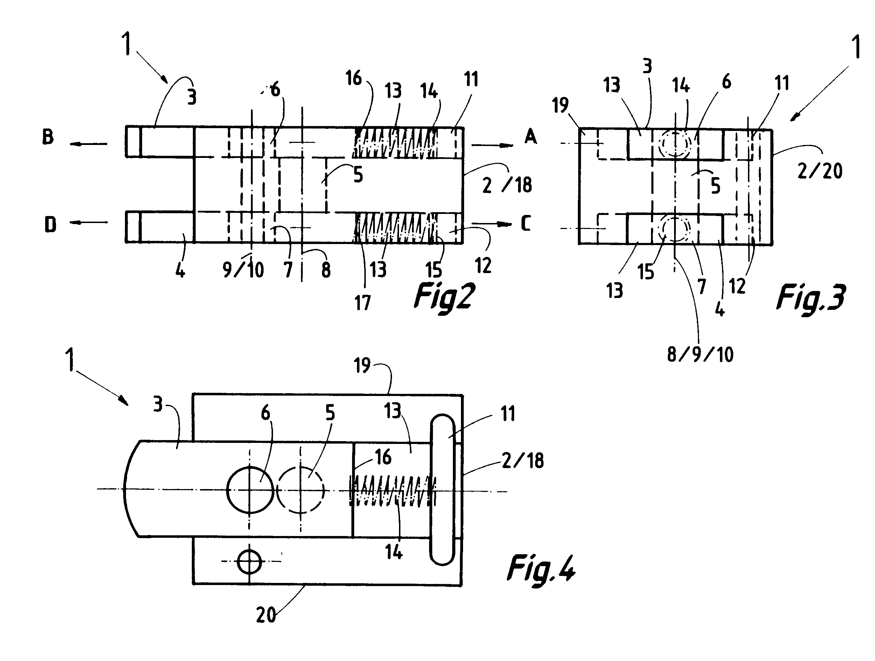

In den Figuren 2 bis 4 sind die Dosierschieber 3 und 4 durch die entspannten Federn 14 und 15 gegenüber der Dosierbohrung 5 des Dosierblockes 2 in Sperrstellung gebracht. Die von einer Füllmaschine kommenden Flaschen werden über einen Tranporteur der Einlaufschnecke und den Einlaufstern der Dosiermaschine zugeführt. In der Dosiermaschine wird die Flasche genau unter das Dosierventil zentriert und durch Öffnen des Dosierventils mit einer bestimmten Menge immobilisierter Hefe dosiert. Dies geschieht beispielsweise dadurch, daß über eine Nockenscheibe und einem bestimmten Transportweg der Dosierschieber 3 in Pfeilrichtung A bewegt wird, so daß die Feder 14 zusammengedrückt wird und die Dosierbohrung 6 mit ihrer Achse 9 annähernd koaxial zur Achse 8 der Dosierbohrung 5 des Dosierblockes 2 gesetzt wird. Von einer hier nicht näher dargestellten Abgabeeinrichtung, wird nun das immobilisierte Substrat, beispielsweise die Hefe, in die Dosierbohrung 5 eingebracht. Durch eine weitere Bewegung der Nockenscheibe schließt der Dosierschieber 3 durch Verfahren in Pfeilrichtung B, wobei die Feder 14 entspannt wird. Sollte sich hierbei eine Substratkapsel zwischen Schieber 3 und Dosierblock 2 bzw. dessen Bohrung 5 einklemmen, verbleibt die Feder 14 in der bis dort eingenommenen Position, da die Federrückstellkraft kleiner ist als die Kraft, die die Kapsel zum Knacken bzw. Brechen führen würde.

Eine weitere Zufuhr von gekapseltem Substrat ist nicht mehr möglich.

Nach einem weiteren Verfahrweg der Nockenscheibe wird der Schieber 4 in Richtung C bewegt, so daß die Bohrung 7 mit ihrer Achse 10 koaxial unter der Bohrung 5 bzw. deren Achse 8 zu liegen kommt. Sodann kann das immobilisierte Substrat aus der Dosierbohrung 5 austreten und in die Flasche einfallen. Der Dosierschieber 4 fährt in Pfeilrichtung D in seine Schließbewegung und der Dosiervorgang, wie beschrieben, kann sich wiederholen.

Der Kontakt der Flasche mit dem Dosierschiebeventil wird hierbei vermieden, so daß eine Benetzung durch Wein nicht stattfinden kann. Das Dosierschieberventil wird zwischen Ein- und Auslaufstern neu mit immobilisierter Hefe für die nächste Dosierung beschickt. Die dosierten Flaschen gelangen anschließend zu einem Bidul- und Kronenkork-Verschließer. Hier werden sie für die Lagerung im Keller verschlossen, in welchem die zweite Gärung stattfindet.

Mit der vorliegenden Erfindung wird ein Ventil geschaffen, mittels dem eine genaue und zuverlässig arbeitende Dosierung von immobilisiertem Substrat, insbesondere gekapselter Hefe bei der Champagner-Herstellung gewährleistet wird.

### Bezugszeichenliste

- 1: Dosierschieberventil
- 2: Dosierblock
- 3: Dosierschieber
- 4: Dosierschieber
- 5: Dosierbohrung von 2
- 6: Dosierbohrung von 3
- 7: Dosierbohrung von 4
- 8: Achse von 5
- 9: Achse von 6
- 10: Achse von 7
- 11: Anschlag (Paßfeder)
- 12: Anschlag (Paßfeder)
- 13: Schieberwand
- 14: Rückstellmittel (Feder)
- 15: Rückstellmittel (Feder)
- 16: Stirnseite von 3
- 17: Stirnseite von 4
- 18: Steg von 2
- 19: Wandung von 2
- 20: Wandung von 2

## Patentansprüche

1. Ventil zur Dosierung von immobilisiertem Substrat,
dadurch gekennzeichnet,
daß das Ventil (1) einen, mindestens eine durchragende Dosierbohrung (5) besitzenden Dosierblock (2) aufweist, dessen Dosierbohrung(en) beidseitig von verfahrbaren Dosierschiebern (3,4) abdeckbar ist (sind), die durchragende Dosierbohrungen (6,7) aufweisen, welche mit der Dosierbohrung(en) (5) des Dosierblocks (2) wahlweise in eine annähernd Koaxialstellung bringbar sind und über mechanische, pneumatische oder elektrische Rückstellmittel (14/15), deren Rückstellkraft einstell- oder wählbar ist, in Sperrstellung versetzbar sind.

2. Ventil nach Anspruch 1,
dadurch gekennzeichnet,
daß der Dosierblock H-förmig ausgebildet ist und jeweils eine, zur Aufnahme der Dosierschieber (3,4) geeignete Schieberwanne (13) aufweist.

3. Ventil nach Anspruch 1 bis 2,
dadurch gekennzeichnet,
daß die Schieberwanne (13) jeweils einen Anschlag (11,12) aufweist.

4. Ventil nach Anspruch 1 bis 3,
dadurch gekennzeichnet,
daß als Rückstellmittel (14,15) für die Dosierschieber (3,4) jeweils eine Feder verwendbar ist.

5. Ventil nach Anspruch 4,
dadurch gekennzeichnet,
daß die als Rückstellmittel ausgebildeten Federn (14,15) zwischen Stirnseite (16,17) der Dosierschieber (3,4) und Anschlag (11,12) angeordnet sind.
